# EUROPÄISCHE PATENTSCHRIFT

(11) **EP 1 889 749 B1**
(45) Veröffentlichungstag und Bekanntmachung des Hinweises auf die Patenterteilung: **17.09.2008**
(21) Anmeldenummer: 07114521.3
(22) Anmeldetag: 17.08.2007
(51) Int. Cl.: B60R 13/04

(54) **Zierblende**
Decorative panel
Enjoliveur

(30) Priorität: 18.08.2006 DE 102006038658
(43) Veröffentlichungstag der Anmeldung: 20.02.2008
(73) Patentinhaber: DURA Automotive Body and Glass Systems GmbH, 58840 Plettenberg (DE)
(72) Erfinder: Bittner, Norbert DURA Automotive Body and Glass Systems GmbH, 58452 Witten (DE)
(74) Vertreter: Bungartz, Klaus Peter

(56) Entgegenhaltungen:
- EP-A- 1 584 517
- DE-A1- 4 142 599
- DE-A1- 19 741 538
- DE-U1- 20 201 528
- US-A- 5 968 614

## Beschreibung

### Technisches Gebiet

Die Erfindung betrifft eine Zierblende für einen Rahmenabschnitt einer Kraftfahrzeugkarosserie, ausgebildet zum Aufstecken auf eine das Dach mit einem unteren Teil der Karosserie verbindende Säule in eine Aufsteckrichtung mit einer, einen äußeren Teil der Säule abdeckenden Außenblende und Befestigungsmitteln zum rastenden Befestigen der Außenblende an der Säule, die eine mit der Außenblende verbundene U-förmige Aufnahme, die einen ersten Halterand der Säule nach innen umklappend umgreift, und zumindest eine, im Abstand zum Halterand angeordnete Verschiebesicherung umfassen.

### Stand der Technik

Dokument DE-A-4 142 599 offenbart eine solche Zierblende. Eine solche, auf Karosserieteile aufsteckbare Zierblende ist aus der EP 1584 517 auch bekannt. Die gattungsgemäßen Zierblenden werden im Kraftfahrzeugbau verwendet und kommen insbesondere als Schmuck- und/oder Abdeckzierblenden für Karosseriesäulen (insbesondere B und C-Säule) oder zur Abdeckung von Rahmenteilen an Fahrzeugtüren, Kofferraumklappen oder ähnlichem zum Einsatz. Hierbei sind neben des möglichst hochwertigen optischen und haptischen Erscheinungsbildes wesentliche Anforderungen an die Blenden, dass sie kostengünstig herstellbar, ohne zu großen Raumbedarf vom Zulieferer zum Werk transportierbar und dort einfach montierbar sind.

Die in der oben genannten EP 1584 517 offenbarte Säulenzierblende weist ein Befestigungselement auf, das bei Aufstecken der Zierblende auf die Säule, etwa die B-Säule eines Kraftfahrzeugs, durch die dem Zierblendenwerkstoff innewohnende Elastizität mit der Säule verrastet. Die Zierblende wird ist im wesentlichen in Y-Richtung, dass heißt horizontal und quer zur Fahrzeuglängsachse, auf die Karosserie aufgesteckt. Dabei dringt ein von der Außenblende nach innen ragendes, hier als Klipp ausgebildetes Befestigungselement durch eine in der Karosserie vorzusehende Öffnung in den inneren Hohlraum des Rahmenabschnittes der Säule vor.

Obwohl diese Ausgestaltung bereits eine einfache und trotzdem sichere und langlebige Befestigung der Zierblende ermöglicht, ist doch eine noch weitere Vereinfachung mit möglichst höheren Nutzwert der Zierblende wünschenswert. Bei der bekannten Zierblende muss nämlich zunächst in die Säule eine Öffnung eingebracht und ein nach innen weisender Hakenteil vorgesehen werden, was zum einen zusätzlichen Fertigungsaufwand und zum anderen die Öffnung des Säuleninnenraumes nach außen bedeutet, da die Rastöffnung durch Einsetzen der Zierblende nicht luftdicht verschlossen wird. Ferner können die verhältnismäßig kleinen Befestigungselemente vor oder während der oft etwas hektischen Montage brechen.

Ferner bringt die durch die Konstruktion bedingte Aufsteckbewegung mit sich, dass die Zierblende nicht in allen Bereichen eng an der Außenkontur der Säule anliegen kann und die Haltekraft begrenzt ist. Dies birgt unter anderem die Gefahr, dass sich die Zierblende zum Beispiel infolge der Einwirkung höherer Temperaturen durch Sonneneinstrahlung und der damit einhergehenden Verformung zumindest teilweise von der Säule abhebt oder gar löst. Ferner können gerade im Resonanzbereich unerwünschten Störgeräusche auftreten, wenn die nur punktuell befestigte Zierblende mit Bereichen, die von der Befestigung entfernt sind, gegen das Material der Säule stößt. Um einen guten Halt gewährleisten zu können, sind somit an die Passgenauigkeiten der Bauteile hohe Anforderungen zu stellen.

Ein weiteres Problem der bekannten Zierblende liegt darin, dass durch das Anbringen in Y-Richtung eine gleichzeitige Verblendung sowohl der zum Fahrzeugäußeren als auch der zum Fahrzeuginneren weisenden Säulenoberfläche durch ein und dieselbe Zierblende ausgeschlossen ist.

Die US 5,968,614 offenbart eine Zierblende, die mit einem Blendenabschnitt eine Körperkante eines Rahmenabschnitts einer Karosserie umgreift, die aber ansonsten über einen Klebestreifen mit dem Rahmenabschnitt verklebt wird. Solche Verklebungen bringen die Gefahr des Lösens mit sich und bedingen ferner, selbst wenn sie dauerhaften Halt gewährleisten sollten, eine verhältnismäßig aufwendige Montage. Auch sind sie im Bedarfsfall, zum Beispiel im Falle einer Reparatur oder im Rahmen des Recyclings nach Erreichen des Endes der Fahrzeuglebensdauer nicht ohne großen Aufwand zu entfernen. Insbesondere werden nach dem Entfernen stets Klebstoffreste auf der Karosserie zurückbleiben, die aufwendig zu beseitigen sind. In die Klebstofffuge eindringende Feuchtigkeit und Schmutz gefährden darüber hinaus eine über die gesamte Lebensdauer des Fahrzeugs zu garantierende einwandfreie Verbindung. In der Fertigung bergen zu verklebende Bauteile das Problem, dass bei versehentlich falscher Ausrichtung des Bauteils ein schnelle und problemlose Korrektur der fehlerhaften Ausrichtung nur schwer möglich ist und dass Klebstoffe meist Lösungsmittel ausdünsten, die wiederum höhere Anforderungen an die Arbeitssicherheit stellen.

### Darstellung der Erfindung

Es ist daher Aufgabe der Erfindung, eine Zierblende zu schaffen, die bei geringen Herstellungskosten leicht und dauerhaft montierbar ist.

Insbesondere soll die neue Zierblende auf der Säule, die einen Rahmenabschnitt der Karosserie eines Kraftfahrzeugs bildet, ohne Klebstoffe befestigt werden können und bei möglichst minimierten Herstellungskosten den steigenden Qualitätsanforderungen und Gestaltungsanforderungen der Kraftfahrzeugindustrie über die gesamte Fahrzeuglebensdauer gerecht werden. Durch eine geeignete konstruktive Gestaltung soll eine leichte, zerstörungsfreie Demontage ermöglicht werden. Die Anforderungen an die Fertigungstoleranzen sollen reduziert werden, was nicht nur den Aufwand der Fertigung sondern auch den des begleitenden Qualitätsmanagements verringert.

Die Aufgabe wird dadurch gelöst, dass die U-förmige Aufnahme eine der Außenblende gegenüberliegend angeordnete Innenblende aufweist, die sich bei aufgesteckter Zierblende längs einer Innenfläche der Säule erstreckt und die Verschiebesicherung von zumindest einem, einen zweiten Halterand des Rahmenabschnitts zumindest abschnittsweise hintergreifenden Widerlager in Verbindung mit der U-förmigen Aufnahme gebildet ist, wobei die Außenblende und die U-förmige Aufnahme zum Aufsetzen der Zierblende auf den von der Säule gebildeten Rahmenabschnitt gegen eine elastische Rückstellkraft aufweitbar sind und bei aufgesteckter Zierblende die Säule wenigstens abschnittsweise zwischen sich einzuklemmen vermögen.

Die Außenblende dient wie bisher der Verblendung der zum Fahrzeugäußeren gerichteten Oberfläche der Säule. Mit seiner nach innen gerichteten Oberfläche liegt der Außenblende somit wenigstens zum Teil an der zum Fahrzeugäußeren weisenden Oberfläche der Säule an. Die äußere Oberfläche des Außenblendes ist die für den Betrachter sichtbare Oberfläche und wird entsprechend hochwertig mit bekannten Verfahren bzw. Maßnahmen gestaltet.

Die U-förmige Aufnahme ist nun mit der Innenblende versehen, dass heißt die Innenblende schließt sich in beliebiger Länge an den zweiten Schenkel der U-förmigen Aufnahme an, während die Außenblende die Verlängerung des ersten Schenkel darstellt. Diese Verbindung, sowohl der Innen- als auch der Außenblende mit der U-förmigen Aufnahme kann integral, also einstückig, oder auch über übliche Verbindungsverfahren erfolgen. So kann im Bedarfsfalle die U-förmige Aufnahme aus einem anderen Material gefertigt sein als die Innenblende oder für die Innenblende kann ein anderes Material als für die Außenblende verwendet werden. In diesem Fall ist die Zierblende zunächst mehrteilig und wird dann, zum Beispiel durch Verschweißen der Einzelteile zu einer durchgängigen Blende gefügt oder in 2 Schritten als 2-Komponententeil hergestellt.

Solchermaßen hergestellt, bildet die Zierblende ein durchgängiges Profil, das einfach auf den durch die Säule gebildeten Rahmenabschnitt aufgesteckt werden kann. Mit der U-förmigen Aufnahme und der Innenblende umgreift die Zierblende nach bestimmungsgemäßem Einbau den ersten Halterand des Rahmenabschnitts. Auf diese Weise kann sie hier bereits in einem Punkt fixiert sein. Nun ist nur eine weitere Verschiebesicherung notwendig, die das Abrutschen der U-förmigen Aufnahme verhindert. Diese Verschiebesicherung kann sowohl im vorderen, der U-förmigen Aufnahme zugewandten Bereich liegen als auch an der gegenüberliegenden Seite am Ende der Außenblende angeordnet sein. Das Material der Zierblende sollte dabei so gewählt werden, dass die Säule zwischen der Außenblende und der Innenblende eingeklemmt werden kann, und auch bei entfernt liegenden Befestigungspunkten kein Abheben der freien Enden der Außen- oder Innenblende auftritt.

Die Einklemmwirkung kann durch Einlage metallischer Blattfedern oder sonstiger Hilfsmittel weiter verstärkt werden, wobei die Blattfedern entweder in die U-förmige Aufnahme eingelegt werden können oder auch schon während der Herstellung der U-förmigen Aufnahme in das Wandmaterial eingebettet werden können.

Die erfindungsgemäße Ausgestaltung ermöglicht es, die Zierblende in X-Richtung, das heißt in Längsrichtung des Fahrzeugs, auf das Rahmenabschnitt aufzuschieben. Die Anbringbewegung kann zwar weiterhin geringe Bewegungsanteile in Y und Z-Richtung sowie leichte Schwenkbewegungen vorsehen, ist aber wesentlich in Fahrzeuglängsrichtung ausgerichtet.

Durch die der Zierblende innewohnende Elastizität und deren Ausformung als in etwa U-förmiges Profil können sich die von der Außenblende und der Innenblende gebildeten Profilschenkel bei der Aufschiebebewegung aufweiten. Anschließend kann die Zierblende als Ganzes auf dem Rahmenabschnitt verrasten, in dem sie zumindest ein Teil des Rahmenabschnitts zangenartig umgreift. Vorteilhaft ist hier die Flächenberührung im Rahmen der U-förmigen Aufnahme und Linienberührung im Rahmen der Rastverbindung, die einen sicheren Halt ohne Eindringen von Haltemitteln in das Inneren des Rahmenabschnittes gewähren.

Die Montage der Zierblende ist damit deutlich gegenüber dem Stand der Technik vereinfacht. Durch erneutes Aufweiten der Profilschenkel lässt sich die Zierblende ohne großen Aufwand wieder demontieren. Zierblenden können so im Schadensfall, bei fehlerhafter Ausrichtung am Band oder bei gewünschter Änderung des optischen Erscheinungsbildes des Fahrzeugs schnell und unkompliziert ausgetauscht werden. Auch Reparaturarbeiten an dem Rahmenabschnitt können so in einfacher Weise ohne störende Zierblenden durchgeführt werden.

Dadurch, dass die Zierblende mit dem Rahmenabschnitt verrastet und sich die Zierblende gewissermaßen durch die ihr innewohnende Elastizität an diesem festhält, können die Anforderungen an die Fertigungstoleranzen gemindert und die komplexen konstruktiven Ausgestaltungen sowohl der bekannten Zierblenden als auch der Rahmenabschnitte der Karosserie vereinfacht werden. Verrippungen, die üblicherweise zu Verstärkungszwecken im Bereich von Befestigungsmitteln vorzusehen waren, können entfallen. Auch die Werkzeuge zur Herstellung der Zierblenden, wie z.B. Spritzgussformteile, können einfacher und somit kostengünstiger ausgestaltet werden.

Letztlich führt die Vereinfachung der Montage und der Konstruktion sowie die Minderung der Toleranzanforderungen zu einer Kostenreduktion und schafft zusätzliche gestalterische Freiräume für weitere im Bereich der Zierblende oder des Rahmenabschnitts denkbare Ausgestaltungen.

Die Zierblende kann über zwei grundlegende Mechanismen mit dem Rahmenabschnitt verbunden werden. Zum einen kann im Bereich der U-förmigen Aufnahme eine reibschlüssige Klemmverbindung vorgesehen werden, deren Sitz dann über die zusätzliche Verschiebesicherung gewährleistet ist. Diese zusätzliche Verschiebesicherung kann über ein Widerlager der Abdeckblende realisiert sein, das einen zweiten Halterand des Rahmenabschnittes hintergreift. Mit Hintergreifen ist im Sinne der vorliegenden Beschreibung grundsätzlich ein funktionelles Hintergreifen gemeint, also die Tatsache, dass in Sicherungsrichtung gegen Abrutschen eine formschlüssige Verbindung vorliegt.

Die zusätzliche Verschiebesicherung kann aber auch, entweder zusätzlich oder anstelle der im vorherigen Absatz beschriebenen Sicherung an der Stelle der Innenblende vorgesehen sein. Hier kann die Innenblende einen in Richtung des Rahmenprofils hervorspringenden Rand aufweisen, der in eine Nut oder Sicke des Rahmenprofils eingreift oder eine sonstige Kante zu hintergreifen vermag. Auch diese Sicherung gewährleistet einen sicheren Halt.

Schließlich können auch beide Sicherungen vorgesehen sein. Bei entsprechender Materialdicke und Elastizität kann dann auch auf den reibschlüssigen Sitz der U-förmigen Aufnahme verzichtet werden oder es kann ein größeres Spiel gewählt werden, wobei unter reibschlüssig nicht eine Presspassung zu verstehen ist, sondern "nur" eine den Halt des KunststofFteil gewährleistende Enge des Sitzes. Bevorzugt wird die Außenblende mit ihrer Innenseite eben an einem größeren Abschnitt des Rahmenelementes anliegen, so dass eine Last von der meist als KunststofFteil ausgebildeten Zierblende auf das Rahmenelement ohne Bruch oder große Verformungen übertragbar ist.

Die Zierblende ist bei einer bevorzugten Ausgestaltung somit so ausgestaltet, dass die in Fahrzeuglängsrichtung weisenden Haltekräfte zum Halten der Zierblende auf dem Rahmenabschnitt ausschließlich durch die aus einer Aufweitung der von der Innenblende und der Außenblende gebildeten Profilschenkel und der damit einhergehenden Rückstellkraft einerseits sowie durch das formschlüssige Umgreifen der Halteränder des Rahmenabschnitts anderseits gewährleistet sind. Auf zusätzliche Befestigungsmittel wie Schrauben, Nieten, Klebungen oder ähnliches kann gänzlich verzichtet werden. Dies führt nicht nur zu einer einfacheren Gestaltung der Zierblende, sondern eröffnet neben dem Einsparen dieser Befestigungsmittel auch die Möglichkeit, auf Befestigungsöffnungen im Rahmenabschnitt zu verzichten.

Dichtungen, die das Innere des von der Säule gebildeten Rahmenabschnitts gegen äußere Einflüsse schützen sollen, werden entbehrlich und Fahrgeräusche können nicht mehr so einfach in den Fahrzeuginnenraum eindringen. Toleranzabstimmungen zwischen den Bauteilen können entfallen.

Allein durch das Aufschieben auf den Rahmenabschnitt in Fahrzeuglängsrichtung wird eine sichere Positionierung der Zierblende gewährleistet. Arbeiten am Produktionsband können schnell und zuverlässig durchgeführt werden, ohne dass zusätzliche Bauteile oder Werkzeuge benötigt werden. Gleichzeitig kann durch Aufweiten der Profilschenkel gegeneinander die Zierblende wieder entfernt werden, ohne dabei die Zierblende zerstören zu müssen. Fehlausrichtungen der Zierblende sind leicht korrigierbar.

Von Vorteil ist eine Ausgestaltung, die vorsieht, dass die Mittel zum Verrasten mit dem Rahmenabschnitt ausschließlich Halteränder des Rahmenabschnitts umgreifen, die in einer äußeren Umfangskontur Profilquerschnitts des von der Säule gebildeten Rahmenabschnitts liegen. Durch diese Maßnahme ist es möglich, gänzlich darauf zu verzichten, Öffnungen in den Rahmenabschnitt einzubringen, um die zum Verrasten notwendigen Halteränder zu schaffen. Der Rahmenabschnitt kann über seinen gesamten Umfang geschlossen bleiben. Das Innere des Rahmenabschnitts ist somit keinen äußeren Einflüssen ausgesetzt, die Fertigung der Karosserie wird vereinfacht und auf zusätzliche Dichtungsmaßnahmen kann verzichtet werden.

Zur weiteren Vereinfachung der Zierblende kann diese derart ausgestaltet sein, dass die Mittel zum Verrasten mit dem Rahmenabschnitt bzw. der Säule durch integrale Ausformungen des Zierblendenquerschnittsprofils gebildet sind. Es sind keine zusätzlichen Befestigungselemente wie Klipps oder Rasthaken an der Zierblende vorzusehen. Die Ausformung des Profilquerschnittsverlaufs der Zierblende stellt vielmehr selbst die notwendigen Befestigungsmittel dar. Dabei wird bevorzugt der äußere Rand der Innenblende und/oder der Außenblende nach innen, also bei bestimmungsgemäßem Einbau zum Rahmenabschnitt hin, umgebogen. Dieser äußere Rand kann dann mit einer Funktionskante des Rahmenabschnitts bzw. der Säule verrasten, dass heißt hier, diese zur Bildung der Verschiebesicherung in Abzugsrichtung hintergreifen.

Um ein besonders enges Anliegen der Zierblende an dem von der Säule gebildeten Rahmenabschnitt zu erreichen, ist ein Querschnittsverlauf des Zierblendenprofils vorgesehen, der dem Querschnittsverlauf des Rahmenabschnittes folgt. So schmiegt sich die Innenseite der Zierblende besonders eng an die Außenseite des Rahmenabschnittes an, was für einen sicheren und festen Sitz sorgt und beispielsweise unerwünschten Klappergeräuschen entgegenwirkt.

Vorteilhaft ist auch eine Ausgestaltung, bei der die Innenblende der einen wesentlichen Bereich der zur Fahrzeuginnenseite gerichteten Oberfläche der Säule abdeckt. So verdeckt die Zierblende nicht nur mit der Außenblende die zum Fahrzeugäußeren gerichtete Oberfläche der Säule, sondern zusätzlich mit der Innenblende auch die zum Fahrzeuginneren gerichtete Oberfläche des entsprechenden Rahmenabschnitts. Die optischen und haptischen Gestaltungsmöglichkeiten sind dadurch wesentlich erweitert.

Um eine möglichst hohe und gezielt ausgerichtete Rückstellkraft zu erreichen oder um die gestalterischen Möglichkeiten zu erweitern, kann das Zierblendenmaterial mehrschichtig, insbesondere aus einem Werkstoffverbund, hergestellt sein. Während die äußere Oberfläche der Zierblende im wesentlichen dekorativen Zwecken dient, können innerhalb des Werkstoffverbundes Materialien zum Einsatz kommen, die beispielsweise die Elastizität der Zierblende und somit die Rückstellkraft der Profilschenkel bei deren Aufweitung erhöhen.

So sind etwa Einlagen aus Stahl, insbesondere Federstahl, oder ähnlich wirkenden Materialien denkbar, die von Kunststoff umspritzt sind, während die Zierblendenaußenseite von einer vom Kunststoff hinterspritzten Dekorschicht gebildet sein kann. Innenseitig kann die Zierblende eine Beschichtung aus Weichkunststoff aufweisen, die den Reibungskoeffizienten erhöht, Oberflächenungenauigkeiten oder Toleranzabweichungen ausgleicht und möglichen Störgeräuschen, z.B. Rappeln bei Passungenauigkeiten, entgegenwirkt.

Darüber hinaus können an der Zierblende auch weitere Funktionselemente ausgebildet bzw. angeformt sein. Zu denken ist dabei insbesondere an Dichtungen verschiedenster Art, an Aufnahmen zur Befestigung oder Führung weiterer Bauteile, an Vorrichtungen zur Erzielung dekorativer Effekte, an Signaleinrichtungen wie Leuchten oder etwa an Embleme der Hersteller oder Typenbezeichnungen.

### Kurze Beschreibung der Abbildungen der Zeichnungen

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigen

Fig. 1 eine schematische Darstellung einer Zierblende und des ihr zugeordneten Rahmenabschnitts in Form einer Fahrertür, und

Fig. 2 die Ansicht des in Fig.1 angedeuteten Schnitts A-A mit der auf der Säule verrasteten Zierblende (gestrichelt dargestellt) sowie eine schematischen Andeutung der Aufschiebebewegung der Zierblende.

### Bester Weg zur Ausführung der Erfindung

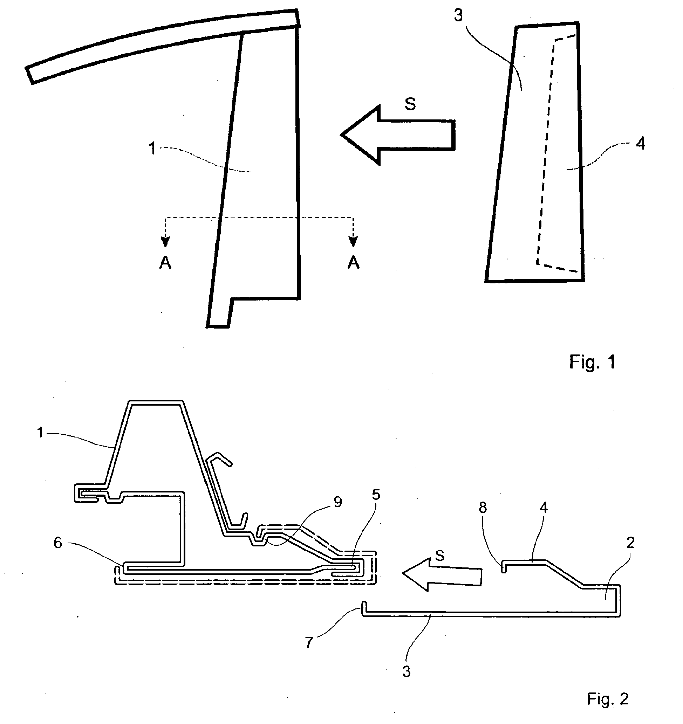

In Fig. 1 ist ein Ausschnitt einer Fahrzeugtür, hier beispielhaft der Fahrertür, dargestellt, deren hinterer Karosseriebereich eine Säule 1 darstellt. Säulen sind dabei alle im Wesentlichen vertikal ausgerichteten Säulen. Hierzu zählen die üblicherweise als A-, B-, C- oder D-Säule eines Kraftfahrzeugs bezeichneten Karosseriebereiche. Die Säule 1 ist hier als übliches Blechhohlprofil ausgebildet.

Neben dem Fahrzeugtürausschnitt ist eine erfindungsgemäße Zierblende schematisch dargestellt. Diese weist zwei in Bezug auf die Zeichenebene in Fig. 1 hintereinander liegende Profilschenkel auf, die von einer Innenblende 4 und einer Außenblende 3 gebildet sind. Die hinter der Außenblende 4 dargestellte Innenblende 5 ist, da von der Außenblende 4 verdeckt, durch die gestrichelte Linie angedeutet. Der Pfeil illustriert die Aufsteckbewegungsrichtung S. Die Aufsteckbewegung ist also im Wesentlichen in X-Richtung des Fahrzeugs ausgerichtet, kann dabei natürlich auch kleinere Komponenten in Y- (parallel der Fahrzeugquerachse) oder Z-Richtung (parallel zur Fahrzeughochachse) sowie leichte Schwenkbewegungen aufweisen. Zur Montage der Zierblende kann diese, ohne dass es weiterer Befestigungselemente bedarf, auf die Säule 1 aufgeschoben werden.

Zur Verdeutlichung der Funktionsweise der Zierblende zeigt Fig. 2 einen Querschnitt durch die Säule 1 samt der darauf montierten Zierblende (gestrichelt dargestellt) sowie die Zierblende vor der Montage.

Beim Aufschieben der Zierblende auf die Säule1 weiten sich die von der Innenblende 4 und der Außenblende 3 gebildeten Profilschenkel der U-förmigen Aufnahme 2 auf. Am äußeren Rand der Außenblende 4 und der Innenblende 5 ist das Zierblendenprofil jeweils zur Säule 1 hin in Form von zwei Biegeschenkeln gekrümmt, die ein Widerlager 7 der Zierblende zum Hintergreifen eines zweiten Halterandes 6 auf Seiten der Außenblende 3 und eine Rückhaltekante 8 zum Hintergreifen eines dritten Halterandes 9 auf Seiten der Innenblende 4 bilden. Diese Biegeschenkel bilden hier die Mittel zum Verrasten der Zierblende mit der Säule 1.

Der Außenblende 4 verdeckt die zum Fahrzeugäußeren gerichtete Oberfläche des Rahmenabschnitts 1 vollständig. Die Innenblende 4 der Zierblende verdeckt deutlich einen wesentlichen Bereich der zum Fahrzeuginneren weisenden Oberfläche der Säule 1, so dass die äußere Oberfläche der Innenblende das optische Erscheinungsbild dieses Karosseriebereichs maßgeblich prägt.

Die Innenblende 4 hat mehr als ein Drittel der Länge der Außenblende 3 und folgt im wesentlichen der Außenkontur der Säule 1. Die dargestellte Zierblende wird also zur optischen Gestaltung der Innenseite der Säule 1 verwendet, was zu einer verbesserten Optik bei geöffneter Türe führt und gleichzeitig den Lack der Türfüllung vor Beschädigung bewahrt. Die Innenblende 4 und Außenblende 3 können zumindest an ihrer Außenseite unterschiedlich beschaffen sein, insbesondere unterschiedliche Oberflächen aufweisen.

Durch entsprechende konstruktive Auslegung der Zierblende, insbesondere durch eine geeignete Materialauswahl und Materialstärke oder durch die Auswahl eines geeigneten Werkstoffverbundes, kann eine geeignet hohe Klemmkraft der Zierblende auf der Säule 1 erzielt werden, so dass auf weitere Befestigungsmittel verzichtet werden kann.

Wie in den Fig. 1 und Fig. 2 dargestellt, ist die Montage denkbar einfach, so dass der Arbeitsaufwand am Produktionsband verringert wird und Fehlerquellen minimiert werden. Herstellerfehler treten seltener auf bzw. können wesentlich einfacher korrigiert werden. Qualitätsaufwand undkosten werden minimiert. Insbesondere im Zubehörhandel, aber auch vom Fahrzeughersteller selber können dem Kunden eine größere Anzahl an optischen Zierblendenvarianten angeboten werden. Zudem ist jederzeit eine zerstörungsfreie Demontage der Zierblende möglich.

## Patentansprüche

1. Zierblende für einen Rahmenabschnitt einer Kraftfahrzeugkarosserie, ausgebildet zum Aufstecken auf eine das Dach mit einem unteren Teil der Karosserie verbindende Säule (1) in eine Aufsteckrichtung (S), mit einer, einen äußeren Teil der Säule (1) abdeckenden Außenblende (3) und Befestigungsmitteln zum rastenden Befestigen der Außenblende (3) an der Säule (1), die eine mit der Außenblende (3) verbundene U-förmige Aufnahme (2), die einen ersten Halterand (5) der Säule (1) nach innen umklappend umgreift, und zumindest eine, im Abstand zum Halterand (2) angeordnete Verschiebesicherung umfassen, **dadurch gekennzeichnet, dass** die U-förmige Aufnahme (2) eine der Außenblende (3) gegenüberliegend angeordnete Innenblende (4) aufweist, die sich bei aufgesteckter Zierblende längs einer Innenfläche der Säule (1) erstreckt und die Verschiebesicherung von zumindest einem, einen zweiten Halterand (6) des Rahmenabschnitts (1) zumindest abschnittsweise hintergreifenden Widerlager (7) in Verbindung mit der U-förmigen Aufnahme (2) gebildet ist, wobei die Außenblende (3) und die U-förmige Aufnahme (2) zum Aufsetzen der Zierblende auf die Säule (1) gegen eine elastische Rückstellkraft aufweitbar sind und bei aufgesteckter Zierblende die Säule (1) wenigstens abschnittsweise zwischen sich einzuklemmen vermögen.

2. Zierblende nach Anspruch 1, **dadurch gekennzeichnet, dass** der zweite Halterand (6) und das ihn hintergreifende Widerlager (7) an dem, der U-förmigen Aufnahme (2) gegenüberliegenden Ende der Zierblende angeordnet ist.

3. Zierblende nach Anspruch 1, **dadurch gekennzeichnet, dass** das den zweiten Halterand (6) hintergreifende Widerlager (7), von der Innenblende (4) oder der Außenblende (3) in Richtung der Säule (1) hervorspringend, und der zweiten Halterand (6) vor dem, der U-förmigen Aufnahme (2) gegenüberliegenden Ende der Zierblende angeordnet sind.

4. Zierblende nach Anspruch 3, **dadurch gekennzeichnet, dass** Widerlager (7), an dem, der U-förmigen Aufnahme (2) abgewandten, freien Ende der Innenblende (4) angeordnet ist.

5. Zierblende nach Anspruch 2, **dadurch gekennzeichnet, dass** die U-förmige Aufnahme (2) als zusätzliche Verschiebesicherung eine in Richtung der Säule (1) hervorspringende Rückhaltekante (8) aufweist, die aus Sicht der Aufsteckrichtung (S) einen dritten Halterand (9) der Säule (1) zu hintergreifen vermag.

6. Zierblende nach Anspruch 5, **dadurch gekennzeichnet, dass** die Rückhaltekante (8) im Bereich der Innenblende (4), insbesondere an dem, der U-förmigen Aufnahme (2) abgewandten, freien Ende der Innenblende (4) angeordnet ist.

7. Zierblende nach Anspruch 1 oder 2, **dadurch gekennzeichnet, dass** die Rückhaltekante (8) im vorderen Bereich der U-förmige Aufnahme (2), aus Richtung der Aufsteckrichtung (S) gesehen vor der Innenblende (4) angeordnet ist.

8. Zierblende nach Anspruch 6 oder 7, **dadurch gekennzeichnet, dass** der dritte Halterand (9) von einer in ein die Säule (1) bildendes Profil eingebrachten Sicke oder Nut gebildet ist.

9. Zierblende nach einem der vorstehenden Ansprüche, **dadurch gekennzeichnet, dass** die in Fahrzeuglängsrichtung weisenden Haltekräfte zum Halten der Zierblende auf der Säule (1) ausschließlich durch die aus einer Profilschenkelaufweitung resultierenden Rückstellkraft sowie durch das formschlüssige Umgreifen der Halteränder (6) der Säule (1) gewährleistet sind.

10. Zierblende nach einem der vorstehenden Ansprüche, **dadurch gekennzeichnet, dass** der zweite Halterand (6) von einem Profilabschnitt der Säule (1) gebildet ist, der zwei parallel zueinander liegenden Blechabschnitten besteht, der insbesondere durch Umfalten aus einem gemeinsamen Blechabschnitt gebildet ist.

11. Zierblende nach einem der vorhergehenden Ansprüche, **dadurch gekennzeichnet, dass** die Zierblende von einem Abschnitt eines im wesentlichen U-förmig gebogenen Profils mit geradlinigen oder nicht geradlinigen Schenkeln gebildet ist, wobei zur Bildung des Widerlagers (7) das freie Ende des die Außenblende (3) bildenden Schenkels um 90° oder mehr umgebogen ist.

12. Zierblende dem vorhergehenden Anspruch, **dadurch gekennzeichnet, dass** zur Bildung der Rückhaltekante (8) das freie Ende des die Innenblende (4) bildenden Schenkels um 90° oder mehr umgebogen ist.

13. Zierblende dem vorhergehenden Anspruch, **dadurch gekennzeichnet, dass** zur Bildung der Rückhaltekante (8) das freie Ende des die Innenblende (4) bildenden Schenkels um 90° oder mehr umgebogen ist.

14. Zierblende nach einem der vorhergehenden Ansprüche, **dadurch gekennzeichnet, dass** sie aus Kunststoff, insbesondere einem thermoplastischen Kunststoff gefertigt ist.

15. Zierblende nach einem der vorhergehenden Ansprüche, **dadurch gekennzeichnet, dass** sie aus einem mehrschichtigen Werkstoffverbund, hergestellt ist.

16. Zierblende nach einem der vorhergehenden Ansprüche, **dadurch gekennzeichnet, dass** die Innenblende (4) zumindest abschnittsweise mit einer Beschichtung aus Weichkunststoff versehen ist oder aus einem geschäumten Kunststoff hergestellt ist.

17. Zierblende nach einem der vorhergehenden Ansprüche, **dadurch gekennzeichnet, dass** zur Erhöhung der elastischen Rückstellkraft Blattfedern vorgesehen sind, die zumindest abschnittsweise an der Innenseite der U-förmigen Aufnahme (2) angeordnet oder im Bereich der U-förmigen Aufnahme (2) in das Material der Zierblende eingebettet sind.

18. Kraftfahrzeug mit einer Karosserie, die wenigstens eine Säule (1) aufweist, auf den eine Zierblende nach einem der vorhergehenden Ansprüche aufgesteckt ist.

19. Kraftfahrzeug nach Anspruch 18, **dadurch gekennzeichnet, dass** die Säule (1) die A-, B- oder C- Säule der Karosserie ist.

20. Kraftfahrzeug nach Anspruch 19, **dadurch gekennzeichnet, dass** die Innenblende (4) zumindest teilweise eine Türfüllung der Karosserie abdeckt.

## Claims

1. An ornamental moulding for a frame section of a motor vehicle body, designed for clipping onto a pillar (1) connecting the roof with a lower part of the body in a clip-on direction (S) with an outer moulding (3) covering an outer part of the pillar (1) and fastening means for the engaging fastening of the outer moulding (3) on the pillar (1), which comprise a U-shaped mounting (2) connected with the outer moulding (3) which embraces a first holding edge (5) of the pillar (1) in a manner folding over to the inside and at least one slide protection arranged at a distance to the holding edge (2), **characterized in that** the U-shaped mounting (2) comprises an inner moulding (4) arranged opposite the outer moulding (3) which with clipped-on moulding extends along an inner surface of the pillar (1) and the slide protection is formed of at least one abutment (7) at least in sections engaging behind a second holding edge (6) of the frame section (1) in conjunction with the U-shaped mounting (2), wherein the outer moulding (3) and the U-shaped mounting (2) for the clipping-on of the ornamental moulding onto the pillar (1) can be expanded against an elastic resetting force and with the ornamental moulding clipped on are at least in sections capable of clamping the pillar (1) between them.

2. The ornamental moulding according to Claim 1, **characterized in that** the second holding edge (6) and the abutment (7) engaging behind said holding edge are arranged at the end of the ornamental moulding located opposite the U-shaped mounting (2).

3. The ornamental moulding according to Claim 1, **characterized in that** the abutment (7) engaging behind the second holding edge (6) is arranged projecting from the inner moulding (4) or the outer moulding (3) in the direction of the pillar (1) and the second holding edge (6) are arranged in front of the end of the ornamental moulding located opposite the U-shaped mounting (2).

4. The ornamental moulding according to Claim 3, **characterized in that** the abutment (7) is arranged at the free end of the inner moulding (4) facing away from the U-shaped mounting (2).

5. The ornamental moulding according to Claim 2, **characterized in that** the U-shaped mounting (2) as additional slide protection comprises a retaining edge (8) projecting in the direction of the pillar (1), which from the view of the clip-on direction(S) is capable of engaging behind a third holding edge (9) of the pillar (1).

6. The ornamental moulding according to Claim 5, **characterized in that** the retaining edge (8) is arranged in the region of the inner moulding (4), more preferably on the free end of the inner moulding (4) facing away from the U-shaped mounting (2).

7. The ornamental moulding according to Claim 1 or 2, **characterized in that** the retaining edge (8) is arranged in the front region of the U-shaped mounting (2) seen from the direction of the clipping-on direction(S) in front of the inner moulding (4).

8. The ornamental moulding according to Claim 6 or 7, **characterized in that** the third holding edge (9) is formed by a bead or slot rendered in a profile forming the pillar (1).

9. The ornamental moulding according to any one of the preceding claims, **characterized in that** the holding forces facing in vehicle longitudinal direction for the holding of the ornamental moulding on the pillar (1) are exclusively guaranteed through the resetting force resulting from a profile leg expansion and through the positive embracing of the holding edges (6) of the pillar (1).

10. The ornamental moulding according to any one of the preceding claims, **characterized in that** the second holding edge (6) is formed by a profile section of the pillar (1) which consists of two sheet metal sections located parallel with respect to each other which is more preferably formed from a common sheet metal section through folding-over.

11. The ornamental moulding according to any one of the preceding claims, **characterized in that** the ornamental moulding is formed by a section of a profile substantially bent U-shaped with straight-line or non-straight line legs, wherein for forming the abutment (7) the free end of the leg forming the outer moulding (3) is bent over by 90° or more.

12. The ornamental moulding according to the preceding claim, **characterized in that** for forming the retaining edge (8) the free end of the leg forming the inner moulding (4) is bent over by 90° or more.

13. The ornamental moulding according to the preceding claim, **characterized in that** for forming the retaining edge (8) the free end of the leg forming the inner moulding (4) is bent over by 90° or more.

14. The ornamental moulding according to any one of the preceding claims, **characterized in that** this is manufactured of plastic, more preferably a thermoplastic.

15. The ornamental moulding according to any one of the preceding claims, **characterized in that** this is manufactured of a multi-layer composite material.

16. The ornamental moulding according to any one of the preceding claims, **characterized in that** the inner moulding (4) at least in sections is provided with a coating of soft plastic or is manufactured of a foamed plastic.

17. The ornamental moulding according to any one of the preceding claims, **characterized in that** for increasing the elastic resetting force, leaf springs are provided which at least in sections are arranged on the inside of the U-shaped mounting (2) or embedded in the region of the U-shaped mounting (2) in the material of the ornamental moulding.

18. A motor vehicle with a body having at least one pillar (1) onto which an ornamental moulding according to any one of the preceding claims has been clipped.

19. The motor vehicle according to Claim 18, **characterized in that** the pillar (1) is the A, B or C-pillar of the body.

20. The motor vehicle according to Claim 19, **characterized in that** the inner moulding (4) at least partly covers a door panel of the body.

## Revendications

1. Garniture de calandre d'une portion de châssis d'une carrosserie d'automobile, conçue afin de s'emboîter sur un pilier (1) reliant le toit à la partie inférieure de la carrosserie dans une direction d'emboîtement (S), comportant un panneau extérieur (3) recouvrant une partie extérieure du pilier (1) et des moyens de fixation pour fixer par encliquetage le panneau extérieur (3) sur le pilier (1), qui comprennent un réceptacle en forme de U (2) relié au panneau extérieur (3), qui s'engage autour d'un premier bord de retenue (5) du pilier (1) en se rabattant vers l'intérieur, et au moins un blocage anti-coulissement disposé à distance du bord de retenue (2), **caractérisée en ce que** le réceptacle en forme de U (2) présente un panneau intérieur (4) disposé en vis-à-vis du panneau extérieur (3), qui s'étend le long d'une surface intérieure du pilier (1) lorsque la garniture de calandre est emboîtée et le blocage anti-coulissement est formé par au moins une butée (7) mise en prise par l'arrière au moins sur des portions avec un deuxième bord de retenue (6) du châssis d'automobile (1), en liaison avec le réceptacle en forme de U (2), moyennant quoi le panneau extérieur (3) et le réceptacle en forme de U (2) peuvent être élargis dans le sens contraire d'une force de rappel élastique afin de poser la garniture de calandre sur le pilier (1) et sont en mesure, lorsque la garniture de calandre est emboîtée, de serrer le pilier (1) entre eux au moins sur des portions.

2. Garniture de calandre selon la revendication 1, **caractérisée en ce que** le deuxième bord de retenue (6) et la butée (7) mise en prise avec celui-ci par l'arrière sont disposés à l'extrémité de la garniture de calandre en vis-à-vis du réceptacle en forme de U (2).

3. Garniture de calandre selon la revendication 1, **caractérisée en ce que** la butée (7) mise en prise par l'arrière avec le deuxième bord de retenue (6) est disposée en avancée devant le panneau intérieur (4) ou le panneau extérieur (3) dans la direction du pilier (1), et le deuxième bord de retenue (6) est disposé devant l'extrémité de la garniture de calandre en vis-à-vis du réceptacle en forme de U (2).

4. Garniture de calandre selon la revendication 3, **caractérisée en ce que** la butée (7) est disposée à l'extrémité libre du panneau intérieur (4) qui se détourne du réceptacle en forme de U (2).

5. Garniture de calandre selon la revendication 2, **caractérisée en ce que** le réceptacle en forme de U (2) présente comme blocage anti-coulissement supplémentaire une arête de retenue arrière (8) en avancée dans la direction du pilier (1), qui est en mesure de se mettre en prise par l'arrière avec un troisième bord de retenue (9) du pilier (1) vu dans la direction d'emboîtement (S).

6. Garniture de calandre selon la .revendication 5, **caractérisée en ce que** l'arête de retenue arrière (8) est disposée au niveau du panneau intérieur (4), notamment à l'extrémité libre du panneau intérieur (4), qui se détourne du réceptacle en forme de U (2).

7. Garniture de calandre selon la revendication 1 ou 2, **caractérisée en ce que** l'arête de retenue arrière (8) est disposée dans la zone devant du réceptacle en forme de U (2), devant le panneau intérieur (4) vu dans la direction d'emboîtement (s).

8. Garniture de calandre selon la revendication 6 ou 7, **caractérisée en ce que** le troisième bord de retenue (9) est formé par une nervure ou rainure appliquée dans le profilé formant le pilier (1).

9. Garniture de calandre selon une des revendications précédentes, **caractérisée en ce que** les forces de retenue dirigées dans la direction longitudinale du véhicule afin de retenir la garniture de calandre sur le pilier (1) sont garanties exclusivement par la force de rappel résultant d'un élargissement du pan de profilé ainsi que par l'engagement par conjonction de forme autour des bords de retenue (6) du pilier (1).

10. Garniture de calandre selon une des revendications précédentes, **caractérisée en ce que** le deuxième bord de retenue (6) est formé par une portion de profilé du pilier (1), qui est constituée de deux portions de tôle situées parallèlement l'une à l'autre, ce qui est formé notamment en repliant une portion de tôle commune.

11. Garniture de calandre selon une des revendications précédentes, **caractérisée en ce que** la garniture de calandre est formée par une portion d'un profilé arqué essentiellement en forme de U avec des pans en ligne droite ou en ligne non droite, moyennant quoi, afin de former la butée (7), l'extrémité libre du pan formant le panneau extérieur (3) est recourbée à 90° ou plus.

12. Garniture de calandre selon la revendication précédente, **caractérisée en ce que,** afin de former l'arête de retenue arrière (8), l'extrémité libre du pan formant le panneau intérieur (4) est recourbée de 90° ou plus.

13. Garniture de calandre selon la revendication précédente, **caractérisée en ce que,** afin de former l'arête de retenue arrière (8), l'extrémité libre du pan formant le panneau intérieur (4) est recourbée de 90° ou plus.

14. Garniture de calandre selon une des revendications précédentes, **caractérisé en ce que** elle est fabriquée en plastique, notamment un plastique thermoplastique.

15. Garniture de calandre selon une des revendications précédentes, **caractérisée en ce que** elle est fabriquée dans un matériau composite à plusieurs couches.

16. Garniture de calandre selon une des revendications précédentes, **caractérisée en ce que** le panneau intérieur (4) est pourvu au moins sur des portions d'un revêtement en plastique tendre ou est fabriqué dans une mousse plastique.

17. Garniture de calandre selon une des revendications précédentes, **caractérisée en ce que,** afin d'augmenter la force de rappel élastique, des ressorts à lames sont prévus, qui sont disposés au moins sur des portions sur le côté intérieur du réceptacle en forme de U (2) ou sont incorporés dans le matériau de la garniture de calandre au niveau du réceptacle en forme de U (2).

18. Véhicule automobile comportant une carrosserie, qui présente au moins un pilier (1), sur lequel une garniture de calandre selon une des revendications précédentes est emboîtée.

19. Véhicule automobile selon la revendication 18, **caractérisé en ce que** le pilier (1) est le pilier A, B ou C de la carrosserie.

20. Véhicule automobile selon la revendication 19, **caractérisé en ce que** le panneau intérieur (4) recouvre au moins partiellement un remplissage de porte de la carrosserie.
